# EUROPEAN PATENT SPECIFICATION

(11) **EP 4 009 411 B1**
(45) Date of publication and mention of the grant of the patent: **07.05.2025**
(21) Application number: 20020589.6
(22) Date of filing: 04.12.2020
(51) Int. Cl.: C03C 3/068, C03C 3/12, C03C 4/18, C03C 3/155, C03C 10/00, C04B 35/486, C04B 35/653, H01M 10/0562, H01M 10/0525, C04B 35/626

(54) **LITHIUM ION CONDUCTIVE MATERIAL AND METHOD FOR PRODUCING THE SAME**
LITHIUM-IONEN LEITENDES MATERIAL UND VERFAHREN ZU SEINER HERSTELLUNG
MATÉRIAU CONDUCTEUR D'IONS LITHIUM ET SON PROCÉDÉ DE PRODUCTION

(43) Date of publication of application: 08.06.2022
(73) Proprietor: SCHOTT AG, 55122 Mainz (DE)
(72) Inventor: Schneider, Meike, 65232 Taunusstein (DE); Leukel, Sebastian, 55128 Mainz (DE); Schumacher, Jörg, 70806 Kornwestheim (DE); Roters, Andreas, 55118 Mainz (DE); Schmidbauer, Wolfgang, 55126 Mainz Finthen (DE)
(74) Representative: Ullrich & Naumann PartG mbB

(56) References cited:
- JP-B2- 6 624 892
- KR-A- 20190 078 804

## Description

The present invention relates to a lithium ion conductive material, preferably lithium ion conductive glass ceramic, said material comprising a garnet-type crystalline phase content and an amorphous phase content.

The present invention further relates to a method for providing a lithium ion conductive material.

The present invention even further relates to a component comprising a lithium ion conductive material.

The present invention even further relates to a battery, preferably an all solid-state battery, comprising a component.

Although applicable to any kind of lithium ion conductive material, the present invention will be described with regard to a lithium ion conductive glass ceramics.

Lithium ion batteries have become important as energy source in particular in portable devices, like smartphones, laptops or the like. However, a disadvantage of lithium ion batteries is that the used organic electrolytes are liquids and can leak from the battery or even burn in the event of a short circuit, even more since these chemicals are often hazardous substances. Furthermore, the energy density of the lithium ion batteries is limited, since the use of lithium metal anodes is mostly not possible due to the lack of stability of the electrolyte. The lifetime of these batteries is also limited: Frequent charging and discharging processes may result in lithium dendrites, which can lead to a short circuit between the anode and cathode.

To overcome these problems, all solid-state batteries have been developed using solid-state electrolytes. Although numerous solid lithium ion conductors are known, there are only a few that have sufficient chemical and/or electrochemical stability to allow the use of lithium metal as an anode. These include lithium garnets and LiPON. The ionic conductivity of garnets, typically more than 10⁻⁴ S/cm at room temperature, is significantly higher than that of LiPON, which for this reason is mainly used in thin-film batteries.

However, high temperatures, typically above 1000°C, and/or long process times are required in the manufacture and processing of lithium garnets. This complicates, for example, the co-sintering with other battery materials such as cathode materials, because they are not stable at such high temperatures. In addition, these high temperature sintering steps often result in lithium evaporation, which in turn results in a decreased conductivity that has to be compensated by complex processes, e.g. covering/embedding the material in a "sacrificial material", protection of the furnaces from the lithium vapor, compensation of evaporation in the weighed sample, or the like. A sintering step at low temperatures, on the other hand, does not lead to the conductivities required for a battery.

One solution to this problem is the use of sintering additives that are mixed with the ceramic ion-conducting powder, which gives rise to the problem of homogenization. In order to achieve a homogeneous mixture of the ion conductor and the sinter additive, additional mixing and grinding steps are necessary, which renders the production more expensive. If the mixture is not completely homogenized, e.g. by agglomeration, the sintered component comprises areas with different conductivity, which promote the formation of lithium dendrites and thus reduces the lifetime of the battery.

In JP 2016034883 A garnet particles are coated with an ion-conducting amorphous coating of LiNbO₃ or LiTaO₃ and the garnet particle is doped with boron, among others, However at 700°C-1000°C, only low conductivities of up to 2.3 x 10⁻⁶ S/cm are obtained.

In CN 111056839 A boron is used as dopant in the garnet achieving only low conductivities of 10⁻⁷ S/cm at 950°C for more than 10 hours.

In CN 106025348 A the doping of LLZO with boron at the lanthanum site is described. High conductivities of >10⁻⁴ S/cm are reported, but only after sintering at 1180°C.

Documents JP 6624892 B2 and KR 20190078804 A are also directed to ion conductors comprising a LLZO phase.

One of the problems addressed by embodiments of the present invention is to provide a lithium ion conductive glass ceramic, a component and a battery having a high conductivity and a low sintering temperature.

One of the further problems addressed by embodiments of the present invention is to provide a lithium ion conductive glass ceramic, a component and a battery having a homogeneous conductivity.

One of the further problems addressed by embodiments of the present invention is to provide a method for providing a lithium ion conductive glass ceramic, which can be easily implemented enabling a cheap production in a shorter time than conventional methods.

In an embodiment, the present invention provides a lithium ion conductive material, preferably a lithium ion conductive glass ceramic, said glass ceramic comprising a garnet-type crystalline phase content and an amorphous phase content, wherein said glass ceramics has a sintering temperature of 1000°C or lower, preferably 950°C or lower, and an ion conductivity of at least 1*10⁻⁵ S/cm, preferably at least 2*10⁻⁵ S/cm, preferably at least 5*10⁻⁵ S/cm, preferably at least 1*10⁻⁴ S/cm, and wherein said amorphous phase content comprises boron and/or a composition comprising boron.

In an embodiment, the present invention provides a method for providing a lithium ion conductive material, preferably a lithium ion conductive glass ceramic, according to one of the claims 1-9, comprising the steps of
- Melting of precursor materials, preferably glass ceramic precursor materials to obtain a molten mass,
- Homogenizing said molten mass, and
- Cooling of said homogenized mass, preferably further ceramizing the cooled mass, to obtain a final mass in form of said lithium ion conductive material, preferably a lithium ion conductive glass ceramic according to one of the claims 1-9.

In an embodiment, the present invention provides a component comprising a material, preferably a lithium ion conductive glass ceramic according to one of the claims 1-9, preferably wherein said component is a separator or an electrode of a battery or a membrane, preferably wherein said material, preferably said glass ceramic according to one of the claims 1-9 is co-sintered with at least one other material to obtain said component.

In an embodiment, the present invention provides a battery, preferably an all solid-state battery, comprising a component according to claim 14.

One of the advantages may be that a lithium ion conductive material, a component, and a battery is provided having a high conductivity and a low sintering temperature. One of the further advantages may be that a lithium ion conductive material, a component, and a battery having a homogeneous conductivity is provided. One of the further advantages may be that a method for providing a lithium ion conductive material is disclosed, which can be easily implemented enabling a cheap producing in a shorter time than conventional methods.

In other words, according to embodiments of the present invention, homogenization takes place in the melt, when producing the material, preferably the glass ceramic. During subsequent cooling, the lithium-ion conducting crystal phase crystallizes, which is surrounded by the amorphous residual glass phase. By adjusting the composition of the material as described in embodiments of the present invention, an amorphous phase may be formed, which may comprise essentially boron oxide, lithium oxide and optionally niobium oxide, silicon oxide, aluminum oxide and/or alkaline earth oxides and which both reduces lithium evaporation during sintering and permits a lowering of the sintering temperatures down to e.g. ≤ 1000°C, preferably ≤ 950°C at conductivities of ≥ 2 x 10⁻⁵ S/cm. The glassy phase may surround the ion-conducting garnet crystals of the individual particles, so that homogeneity of the material down to the particle level may be achieved without further grinding or mixing processes. The production of such a material is also scalable on a large scale and may allow significantly shorter process times compared to solid-state synthesis.

Further features, advantages and further embodiments are described or may become apparent in the following.

According to an embodiment of the present invention, said amorphous phase content is below 35 vol-% of the total composition of said material, preferably between 0,5 vol-% and 30 vol-%, preferably between 0,5 vol-% and 10 vol-%, most preferably between 0,5 vol-% and 5 vol-%. One of the advantages is, that on the one hand the lower boundary ensures sufficient efficacy and on the other hand the upper boundary ensures that the garnet crystals can form a continuous network of highly conductive paths during sintering, i.e. represents a percolation threshold.

According to a further embodiment of the present invention, said amorphous phase content comprises lithium oxide and at least one doping agent, preferably at least one of based on niobium, aluminum, tantalum. One of the advantages may be that the stabilization of the cubic phase is enabled in a broader composition range. Use of Nb₂O₅ or Al₂O₃ may be preferred because it is cheaper than Ta₂O₅.

According to a further embodiment of the present invention said garnet-type crystalline phase content is boron-free. One of the advantages may be that the boron is concentrated in the amorphous phase ensuring low melting temperature of this phase and thus lowering the required sintering temperature of the material.

According to a further embodiment of the present invention said material is free of at least one of
- transition metals and compounds thereof and/or
- alkali metals except lithium and compositions thereof and/or
- halogenides and compositions thereof, and/or
- selenium and compositions thereof, and/or
- sulfur and compositions thereof, and/or
- lead and compositions thereof, and/or
- cadmium and compositions thereof, and/or
- tellurium and compositions thereof.

This makes it possible to provide a material, preferably a glass ceramic free of toxic and highly volatile components.

According to a further embodiment of the present invention, said garnet-type crystalline phase having the sum formula of

Li_{7-3x+y-z}AlₓMy^{II} M_{3-y}^{III} M_{2-z}^{IV} M_{z}^{V} O_{12±δ},

wherein M^{II} being a bivalent cation, M^{III} a trivalent cation, M^{IV} a quadrivalent cation and M^{V} a pentavalent cation and wherein x+z>0, preferably wherein said trivalent cation comprising an element of the lanthanides, preferably lanthanum, said quadrivalent cation comprising zircon and said pentavalent cation comprising niobium and/or tantalum and wherein δ < 0,5 represents potential oxygen vaccancies. An advantage may be that a sufficient stabilizing of the cubic crystalline phase is enabled.

According to a further embodiment of the present invention, said garnet-type crystalline phase is provided in form of a cubic garnet-type inorganic solid electrolyte, preferably niobium and/or aluminum doped Lithium Lanthanum Zirconium oxide, LLZO. This provides a high conductivity of the material, preferably glass ceramic.

According to a further embodiment of the present invention, said composition further comprises at least one refining agent, chosen from arsenic oxide, antimony oxide, cerium oxide, and/or tin oxide. This provides refining of the material, preferably in form of a glass ceramic if necessary.

According to a further embodiment of the present invention, the electronic conductivity is smaller than 10⁻⁵ S/cm, preferably smaller than 10⁻⁶ S/cm. One of the advantages may be that the self-discharge of the battery is reduced, e.g. when the material is used as a separator.

According to a further embodiment of the method, said final mass is milled to provide a powder. This enables in an easy way to provide a form of the glass ceramic for further processing, e.g. forming components.

According to a further embodiment of the method, the particles of said powder are provided with a particle size of d₅₀ = 10 micrometer or smaller, preferably of d₅₀ = 5 micrometer or smaller, preferably of d₅₀ = 2 micrometer or smaller, preferably of d₅₀ = 1 micrometer or smaller and wherein said particles comprise the respective content parts of said material with a deviation of less than 50%, preferably of less than 30%, preferably of less than 20% regarding the content of each component of said material. This reduces the probability of areas of different conductivity in the further processing of the powder, e.g sintering.

According to a further embodiment of the method, said powder is sintered with a sintering temperature below 1000 °C, preferably below 950 °C. Such low sintering temperatures reduce evaporation of lithium, therefore ensuring high conductivity and easy manufacturing of the glass ceramic with lower necessary resources.

There are several ways how to design and further develop the teaching of the present invention in an advantageous way. To this end, it is to be referred to the patent claims subordinate to the independent patent claims and to the following explanation of preferred examples of embodiments of the invention on the other hand. In connection with the explanation of the preferred embodiments of the invention, generally preferred embodiments and further developments of the teaching will be explained.

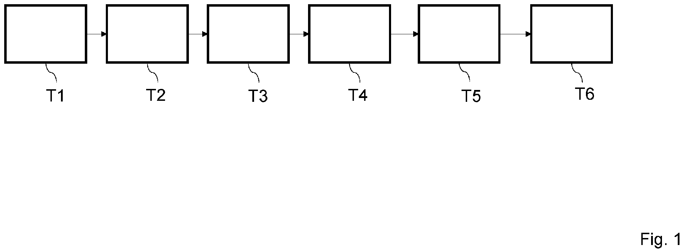

In the drawings
- Fig. 1: shows steps of part of a method according to an embodiment of the present invention.

Fig. 1 is showing method steps for providing a sintered component.

In the following, a method for producing a glass ceramic according to an embodiment of the present invention is described.

Melting takes place in a so-called skull crucible, as described in DE 199 39 782 C1.

The LLZO glass ceramics production is preferably according to methods as described in EP 3097060 B1.

The resulting glass-ceramics were used to produce samples for X-ray diffraction (XRD) investigations. In order to avoid degradation of the samples in contact with water, the sample preparation was carried out without water.

To determine the conductivity as a function of the sintering temperature, the material solidified as a solid block was further processed as follows:
In a first step T1, the block was cut into smaller fragments using a hammer and chisel. These were then fed into a jaw crusher in a further step T2 in one or more passes until fragments of a maximum size of less than 15 mm were produced in the longest dimension. These were ground in a further step T3 to a size d₉₉ < 2 mm on a disk mill.

The obtained coarsely ground powder, here LLZO powder, sintering at low temperatures with a particle size < 2 mm was finely ground in a further step T4 on a pilot dry classifier mill. 10 wt.-% of the particles in the resulting powder had a diameter of less than 0.2-0.5 µm, 50 wt.-% had a diameter of less than 0.6-1.6 µm, 90 wt.-% had a diameter of less than 2.0-2.8 µm, and 99 wt.-% had a diameter of 3.2-4.8 µm.

The obtained finely ground powder was then pressed in a further step T5 into cylindrical specimens having a diameter of 10 mm and a thickness of 1 mm and then in a further step T6 sintered at various temperatures and holding times. This resulted in the relative densities and conductivity values for the corresponding sintered specimens listed in the table below.

| **Example** | 1* | 2* | 3 | 4 | 5 | 6 | 7 | 8 | 9 |
|---|---|---|---|---|---|---|---|---|---|
| **Wt%** | | | | | | | | | |
| Li₂O | 14,65 | 13,15 | 14,44 | 14,89 | 13,43 | 14,45 | 14,36 | 15,17 | 13,69 |
| La₂O₃ | 56,37 | 57,36 | 55,58 | 54,15 | 56,32 | 55,6 | 55,26 | 55,12 | 53,96 |
| ZrO₂ | 21,32 | 21,69 | 21,02 | 17,75 | 22,72 | 21,03 | 20,9 | 20,85 | 23,13 |
| SiO₂ | - | - | 0,21 | 0,2 | 0,21 | - | 0,21 | 0,2 | - |
| Al₂O₃ | - | - | - | - | - | 0,58 | - | - | 1,13 |
| Nb₂O₅ | 7,66 | 7,8 | 7,56 | 10,31 | 6,13 | 7,56 | 7,52 | 7,49 | - |
| Ta₂O₅ | - | - | - | - | - | - | - | - | 7,32 |
| B₂O₃ | - | - | 1,19 | 2,7 | 1,21 | 0,79 | 1,78 | 1,18 | 0, 77 |
| Amorphous Phase (calculated, cations (Li⁺, B³⁺, | Li 2 | Li 1 | Li 2 | Li 2,7 | Li 1,2 | Li 2 | Li 2 | Li 2,5 | Li 1,6 |
| | | | | | | B 0,2 | | | |
| | | | B 0,3 | B 0,7 | B 0,3 | | B 0,45 | B 0,3 | B 0,2 |
| | | | Si 0,03 | | Si 0,03 | Al 0,1 | Si 0,03 | Si 0,03 | Al 0,2 |
| Al³⁺, Si⁴⁺, P⁵⁺) are charge balanced by oxygen (O²⁻), pfu) | | | | | | | | | |
| 1130°C, 0,5h | | | | | | | | | |
| rel. density in % | 99,3 | 94,6 | 99,1 | 97,6 | 94,5 | 97 | | | 96,7 |
| conductivity [S/cm] | 8,0* | 6,4* | 5,24* | 2,1* | 4,5* | 6,7* | | | 4,8* |
| | 10⁻⁴ | 10⁻⁴ | 10⁻⁴ | 10⁻⁴ | 10⁻⁴ | 10⁻⁴ | | | 10⁻⁴ |
| 1000°C, 5h | | | | | | | | | |
| rel. density in % | 63,9 | 66,8 | 90,5 | 88,9 | 86,2 | 96,3 | | | 89,3 |
| conductivity [S/cm] | 2,0E-06 | 5,0E-06 | 3,3* | 1,2* | 1,5* | 5,0* | | | 1,3* |
| | | | 10⁻⁴ | 10⁻⁴ | 10⁻⁴ | 10⁻⁴ | | | 10⁻⁴ |
| 900°C, 5h | | | | | | | | | |
| rel. density in % | | | 76,7 | nb | 78,2 | 84,3 | 74,8 | 80 | 76,7 |
| conductivity [S/cm] | | | 8,0* | nb | 5,0* | 1,3* | 3,2* | 1,2* | 4,0* |
| | | | 10⁻⁵ | | 10⁻⁵ | 10⁻⁴ | 10⁻⁵ | 10⁻⁴ | 10⁻⁵ |

| **Example** | 10 | 11 | 12 | 13 | 14 | 15 |
|---|---|---|---|---|---|---|
| **Wt%** | | | | | | |
| Li₂O | 14,50 | 15,17 | 12,22 | 14,53 | 12,94 | 12,42 |
| La₂O₃ | 55,81 | 55,16 | 51,41 | 55,92 | 50,11 | 50,77 |
| Gd₂O₃ | | | 5,30 | | 5,16 | 5,23 |
| Y₂O₃ | | | 0,66 | | 0,64 | 0,65 |
| ZrO₂ | 21,11 | 20,86 | 28,81 | 21,15 | 28,08 | 28,45 |
| SiO₂ | 0,21 | | | | 0,14 | 0,14 |
| Al₂O₃ | | 0,40 | 1,19 | | 1,74 | 1,76 |
| Nb₂O₅ | 7,59 | 7,50 | | 7,60 | | |
| B₂O₃ | 0,79 | 0,90 | 0,41 | 0,80 | 1,19 | 0,16 |
| P₂O₅ | | | | | | 0,41 |
| Amorphous Phase (calculated, cations (Li⁺, B³⁺, Al³⁺, Si⁴⁺, P⁵⁺) are charge balanced by oxygen (O²⁻), pfu) | Li 2 | Li 2,5 | Li 0,6 | Li 2 | Li 1,2 | Li 0,8 |
| | | | | | | B 0,04 |
| | | | | | B 0,3 | Al 0,1 |
| | B 0,2 | B 0,23 | B 0,1 | B 0,2 | Al 0,1 | Si 0,02 |
| | Si 0,03 | Al 0,07 | | | Si 0,02 | P 0,05 |
| 1130°C, 0,5h | | | | | | |
| rel. density in % | 94,0 | 96,3 | 96,5 | 98,5 | 99,4 | |
| conductivity [S/cm] | 5,8* | 2,7* | 1,0* | 3,5* | 1,5* | |
| | 10⁻⁴ | 10⁻⁴ | 10⁻⁴ | 10⁻⁴ | 10⁻⁴ | |
| 1000°C, 5h | | | | | | |
| rel. density in % | | | | | | |
| conductivity [S/cm] | | | | | | |
| 900°C, 5h | | | | | | |
| rel. density in % | 83,2 | 85,0 | | 74,6 | | |
| conductivity [S/cm] | 2,0* | 9,0* | | 5,0* | | |
| | 10⁻⁴ | 10⁻⁵ | | 10⁻⁵ | | |

The weighed-in composition of the examples according to embodiments of the present invention is summarized in Table 1 in percent by weight. The chemical analysis of the samples/examples may reveal additionally HfO₂, which is a common impurity in ZrO₂. Moreover, the Li₂O content may be reduced due to Li loss by evaporation during the synthesis.

The composition of the amorphous phase is calculated based on the composition of the glass ceramic by the following assumptions:
Li₂O, La₂O₃, Gd₂O₃, Y₂O₃, ZrO₂, Nb₂O₅, Ta₂O₅ form the stoichiometric garnet.

In the absence of Nb₂O₅ and Ta₂O₅, Al₂O₃ enters the garnet and substitutes Li₂O until 0,6 pfu Li+ are replaced by 0,2 pfu Al³⁺. Surplus Li₂O and Al₂O₃, as well as any SiO₂, B₂O₃ and P₂O₅ and further glass formers are ascribed to the amorphous phase. In other words, the given composition is divided into the stoichiometric garnet, which may contain several dopants,

Li_{7-3x+y-z}AlₓM_{y}^{II} M_{3-y}^{III} M_{2-z}^{IV} M_{z}^{V} O_{12±δ},

and an amorphous phase, which comprises the glass formers e.g. SiO₂, B₂O₃, Al₂O₃, and P₂O₅, as well as surplus Li₂O. Divalent ions M^{II} would be ascribed to the crystalline garnet for the sake of clarity, even though the one skilled in the art is aware that divalent cations can also act as glass formers and would be found at least partially in the amorphous phase. It is to be understood that this calculation does not give a precise, actual composition of the amorphous phase, which may deviate due the assumptions made in this calculation and Li loss during the synthesis, but more so elucidates its compositional range and highlights the influence of boron in this phase on the sintering behavior. The composition of the amorphous phase in the table above is given in pfu (parts per formula unit) with regard to LLZO. The amorphous phase is oxidic and thus the elements/cations are charge-balanced by oxygen (O²⁻).

Comparative examples 1* and 2* correspond to the previous state of the art with a glass phase without boron.

In example 1* and 2*, the amorphous phase, calculated by subtracting all components that can crystallize as stoichiometric garnet, comprises only Li₂O. Based on a theoretical garnet structure in example 1*, there are 2 mol Li per formula unit, in example 2*, there is only 1 mol Li per formula unit. In both cases, good conductivities are found during sintering at 1130°C, but even if the sintering temperature is lowered to 1000°C, the sintering temperature drops to below 10⁻⁵ S/cm.

In contrast, examples 3-15 show the effect of high conductivity at low sintering temperatures according to embodiments of the present invention. In addition to the conductivities and density at sintering temperatures of 1130°C, 1000°C, and 900°C, the calculated composition of the amorphous phase is also presented. It can be seen that for all glass ceramics comprising boron in the amorphous phase, conductivities in the order of 10⁻⁴ S/cm are achieved at sintering temperatures of 1000°C. Even if the sintering temperatures are further reduced to 900°C, the conductivities are still in the range of 3.2 x 10⁻⁵ S/cm to 1.3 x 10⁻⁴ S/cm providing a high conductivity compared to conventional glass ceramics.

To summarize, embodiments of the present invention may provide and/or enable the following features and/or advantages:
- low sintering temperature
- easy and cheap manufacturing
- easy implementation
- less resources necessary
- high conductivity
- scalability
- reduced manufacturing time

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

### List of reference signs

- T1-T6: Steps of part of a method

## Claims

1. Lithium ion conductive glass ceramic, said material comprising a garnet-type crystalline phase content and an amorphous phase content, wherein said material having
a sintering temperature of 1000°C or lower, preferably 950°C or lower and an ion conductivity of at least 1*10⁻⁵ S/cm, preferably at least 2*10⁻⁵ S/cm, preferably at least 5*10⁻⁵ S/cm, preferably at least 1*10⁻⁴ S/cm at room temperature,
and wherein said amorphous phase content comprises boron and/or a composition comprising boron.

2. Lithium ion conductive material according to claim 1, wherein said amorphous phase content is below 35 vol-% of the total composition of said material, preferably between 0,5 vol-% and 30 vol-%, preferably between 0,5 vol-% and 10 vol-%, most preferably between 0,5 vol-% and 5 vol-%.

3. Lithium ion conductive material according to claim 1-2, wherein said amorphous phase content comprises lithium oxide and at least one doping agent, preferably at least one of based on niobium, aluminum, tantalum.

4. Lithium ion conductive material according to one of the claims 1-3, wherein said garnet-type crystalline phase content is boron-free.

5. Lithium ion conductive material according to one of the claims 1-4, wherein said material is free of at least one of
- transition metals and compounds thereof and/or
- alkali metals except lithium and compositions thereof and/or
- halogenides and compositions thereof, and/or
- selenium and compositions thereof, and/or
- sulfur and compositions thereof, and/or
- lead and compositions thereof, and/or
- cadmium and compositions thereof, and/or
- tellurium and compositions thereof.

6. Lithium ion conductive material according to one of the claims 1-5, wherein said garnet-type crystalline phase having the sum formula of
Li_{7-3x+y-z}AlₓM_{y}^{II} M_{3-y}^{III} M_{2-z}^{IV} M_{z}^{V} O_{12±δ},
wherein M^{II} being a bivalent cation, M^{II} a trivalent cation, M^{IV} a quadrivalent cation and M^{V} a pentavalent cation and wherein x+z>0, preferably wherein said trivalent cation comprising an element of the lanthanides, preferably lanthanum, said quadrivalent cation comprising zircon and said pentavalent cation comprising niobium and/or tantalum, and wherein δ < 0,5 represents potential oxygen vaccancies.

7. Lithium ion conductive material according to one of the claims 1-6, wherein said garnet-type crystalline phase is provided in form of a cubic garnet-type inorganic solid electrolyte, preferably niobium and/or aluminum doped Lithium Lanthanum Zirconium oxide, LLZO.

8. Lithium ion conductive material according to one of the claims 1-7, wherein said composition further comprising at least one refining agent, preferably comprising at least one arsenic oxide, antimony oxide, cerium oxide, tin oxide.

9. Lithium ion conductive material according to one of the claims 1-8, wherein the electronic conductivity is smaller than 10⁻⁵ S/cm, preferably smaller than 10⁻⁶ S/cm at room temperature.

10. Method for providing a lithium ion conductive material, preferably a lithium ion conductive glass ceramic according to one of the claims 1-9, comprising the steps of
- Melting of precursor materials, preferably glass ceramic precursor materials to obtain a molten mass,
- Homogenizing said molten mass, and
- Cooling of said homogenized mass, preferably further ceramizing the cooled mass, to obtain a final mass in form of said lithium ion conductive material, preferably a lithium ion conductive glass ceramic according to one of the claims 1-9.

11. Method according to claim 10, wherein said final mass is milled to provide a powder.

12. Method according to claim 11, wherein the particles of said powder are provided with a particle size of d₅₀ = 10 micrometer or smaller, preferably of d₅₀ = 5 micrometer or smaller, preferably of d₅₀ = 2 micrometer or smaller, preferably of d₅₀ = 1 micrometer or smaller, wherein said d₅₀ values are weight-based, and wherein said particles comprise the respective content parts of said material with a deviation of less than 50% %, preferably of less than 30%, preferably of less than 20% regarding the content of each component of said material.

13. Method according to claim 11 or 12, wherein said powder is sintered with a sintering temperature below 1000°Celsius, preferably below 950°Celsius.

14. Component comprising a material according to one of the claims 1-9, preferably wherein said component is a separator or an electrode of a battery or a membrane, preferably wherein said material according to one of the claims 1-9 is co-sintered with at least one other material to obtain said component.

15. Battery, preferably an all solid-state battery, comprising a component according to claim 14.

## Patentansprüche

1. Lithiumionen-leitende Glaskeramik, wobei das Material einen Gehalt an kristalliner Phase vom Granattyp und einen Gehalt an amorpher Phase aufweist, wobei das Material
eine Sintertemperatur von 1000°C oder weniger, vorzugsweise 950°C oder weniger und eine Ionen-Leitfähigkeit von mindestens 1*10⁻⁵ S/cm, vorzugsweise mindestens 2*10⁻⁵ S/cm, vorzugsweise mindestens 5*10⁻⁵ S/cm, vorzugsweise mindestens 1*10⁻⁴ S/cm bei Raumtemperatur, aufweist,
und wobei der Gehalt an amorpher Phase Bor und/oder eine borhaltige Zusammensetzung umfasst.

2. Lithiumionen-leitfähiges Material nach Anspruch 1, wobei der Gehalt an amorpher Phase unter 35 Vol-% der Gesamtzusammensetzung des Materials liegt, vorzugsweise zwischen 0,5 Vol-% und 30 Vol-%, vorzugsweise zwischen 0,5 Vol-% und 10 Vol-%, besonders bevorzugt zwischen 0,5 Vol-% und 5 Vol-%.

3. Lithiumionen-leitendes Material nach Anspruch 1-2, wobei der Gehalt an amorpher Phase Lithiumoxid und mindestens ein Dotiermittel, vorzugsweise mindestens eines auf Basis von Niob, Aluminium oder Tantal, umfasst.

4. Lithiumionen-leitendes Material nach einem der Ansprüche 1-3, wobei der Gehalt an granatartiger kristalliner Phase borfrei ist.

5. Lithiumionen-leitendes Material nach einem der Ansprüche 1-4, wobei das Material frei ist von mindestens einem der folgenden Elemente
- Übergangsmetalle und deren Verbindungen und/oder
- Alkalimetalle außer Lithium und deren Zusammensetzungen und/oder
- Halogenide und deren Zusammensetzungen, und/oder
- Selen und dessen Zusammensetzungen und/oder
- Schwefel und dessen Zusammensetzungen und/oder
- Blei und dessen Zusammensetzungen und/oder
- Cadmium und dessen Zusammensetzungen und/oder
- Tellur und dessen Zusammensetzungen.

6. Lithiumionen-leitendes Material nach einem der Ansprüche 1-5, wobei die granatartige kristalline Phase die Summenformel
Li_{7--3x+y-z}AlₓM_{y}^{II} M_{3-y}^{III} M_{2-z}^{IV} M_{z}^{V} O_{12±δ},
aufweist, wobei M^{II} ein zweiwertiges Kation, M^{II} ein dreiwertiges Kation, M^{IV} ein vierwertiges Kation und M^{V} ein fünfwertiges Kation ist und wobei x+z>0, vorzugsweise wobei das dreiwertige Kation ein Element der Lanthaniden, vorzugsweise Lanthan, umfasst, das vierwertige Kation Zirkon umfasst und das fünfwertige Kation Niob und/oder Tantal umfasst, und wobei δ < 0,5 potenzielle Sauerstoff-Leerstellen darstellt.

7. Lithiumionen-leitendes Material nach einem der Ansprüche 1-6, wobei die granatartige kristalline Phase in Form eines kubischen, granatartigen, anorganischen Festelektrolyten, vorzugsweise Niob- und/oder Aluminium-dotiertes Lithium-Lanthan-ZirkoniumOxid, LLZO, bereitgestellt wird.

8. Lithiumionen-leitendes Material nach einem der Ansprüche 1-7, wobei die Zusammensetzung weiterhin mindestens ein Veredelungsmittel, vorzugsweise mindestens ein Arsenoxid, Antimonoxid, Ceroxid, Zinnoxid, umfasst.

9. Lithiumionen-leitfähiges Material nach einem der Ansprüche 1-8, wobei die elektronische Leitfähigkeit kleiner als 10⁻⁵ S/cm, vorzugsweise kleiner als 10⁻⁶ S/cm bei Raumtemperatur, ist.

10. Verfahren zur Herstellung eines Lithiumionen-leitfähigen Materials, vorzugsweise einer Lithiumionen-leitfähigen Glaskeramik nach einem der Ansprüche 1-9, umfassend die Schritte
- Schmelzen von Ausgangsmaterialien, vorzugsweise Glaskeramik-Ausgangsmaterialien, zum Erhalt einer geschmolzenen Masse,
- Homogenisieren der geschmolzenen Masse, und
- Abkühlen der homogenisierten Masse, vorzugsweise weiteres Keramisieren der abgekühlten Masse, zum Erhalt einer endgültige Masse in Form des Lithiumionen-leitenden Materials, vorzugsweise einer Lithiumionen-leitenden Glaskeramik nach einem der Ansprüche 1-9.

11. Verfahren nach Anspruch 10, wobei die endgültige Masse zum Erhalt eines Pulvers gemahlen wird.

12. Verfahren nach Anspruch 11, wobei die Teilchen des Pulvers mit einer Teilchengröße von d₅₀ = 10 Mikrometer oder kleiner, vorzugsweise von d₅₀ = 5 Mikrometer oder kleiner, vorzugsweise von d₅₀ = 2 Mikrometer oder kleiner, vorzugsweise von d₅₀ = 1 Mikrometer oder kleiner, bereitgestellt werden, wobei die d₅₀-Werte gewichtsbasiert sind und wobei die Teilchen die jeweiligen Inhaltsteile des Materials mit einer Abweichung von weniger als 50 %, vorzugsweise von weniger als 30 %, vorzugsweise von weniger als 20 % bezüglich des Gehalts jeder Komponente des Materials umfassen.

13. Verfahren nach Anspruch 11 oder 12, wobei das Pulver mit einer Sintertemperatur unter 1000°Celsius, vorzugsweise unter 950°Celsius, gesintert wird.

14. Bauteil, umfassend ein Material nach einem der Ansprüche 1 bis 9, wobei das Bauteil vorzugsweise ein Separator oder eine Elektrode einer Batterie oder eine Membran ist, wobei das Material nach einem der Ansprüche 1 bis 9 zum Erhalt des Bauteils vorzugsweise mit mindestens einem anderen Material kogesintert ist.

15. Batterie, vorzugsweise eine Festkörperbatterie, mit einem Bauteil nach Anspruch 14.

## Revendications

1. Vitrocéramique conductrice d'ions lithium, ledit matériau comprenant une teneur en phase cristalline de type grenat et une teneur en phase amorphe, ledit matériau ayant
une température de frittage de 1000 °C ou moins, de préférence de 950°C ou moins et une conductivité ionique d'au moins 1*10⁻⁵ S/cm, de préférence d'au moins 2*10⁻⁵ S/cm, de préférence d'au moins 5*10⁻⁵ S/cm, de préférence d'au moins 1*10⁻⁴ S/cm à température ambiante,
et dans lequel ladite teneur en phase amorphe comprend du bore et/ou une composition comprenant du bore.

2. Matériau conducteur d'ions lithium selon la revendication 1, dans lequel ladite teneur en phase amorphe est inférieure à 35 % en volume de la composition totale dudit matériau, de préférence entre 0,5 % en volume et 30 % en volume, de préférence entre 0,5 % en volume et 10 % en volume, de manière préférée entre toutes entre 0,5 % en volume et 5 % en volume.

3. Matériau conducteur d'ions lithium selon la revendication 1 ou 2, dans lequel ladite teneur en phase amorphe comprend de l'oxyde de lithium et au moins un agent dopant, de préférence au moins un agent à base de niobium, aluminium, tantale.

4. Matériau conducteur d'ions lithium selon l'une des revendications 1 à 3, dans lequel ladite teneur en phase cristalline de type grenat est exempte de bore.

5. Matériau conducteur d'ions lithium selon l'une des revendications 1 à 4, dans lequel ledit matériau est exempt d'au moins l'un parmi
- des métaux de transition et des composés de ceux-ci et/ou
- des métaux alcalins à l'exception du lithium et des compositions de ceux-ci et/ou
- des halogénures et des compositions de ceux-ci, et/ou
- du sélénium et des compositions de celui-ci, et/ou
- du soufre et des compositions de celui-ci, et/ou
- du plomb et des compositions de celui-ci, et/ou
- du cadmium et des compositions de celui-ci, et/ou
- du tellure et des compositions de celui-ci.

6. Matériau conducteur d'ions lithium selon l'une des revendications 1 à 5, dans lequel ladite phase cristalline de type grenat a la formule de somme
Li_{7-3x+y-z}AlₓMy^{II}M_{3-y}^{III} M_{2-z}^{IV}M_{z}^{V}O_{12±δ},
dans lequel M^{II} est un cation bivalent, M^{III} un cation trivalent, M^{IV} un cation quadrivalent et M^{V} un cation pentavalent et dans lequel x+z>0, de préférence dans lequel ledit cation trivalent comprend un élément des lanthanides, de préférence le lanthane, ledit cation quadrivalent comprend du zircon et ledit cation pentavalent comprend du niobium et/ou du tantale, et dans lequel δ < 0,5 représente des lacunes potentielles d'oxygène.

7. Matériau conducteur d'ions lithium selon l'une des revendications 1 à 6, dans lequel ladite phase cristalline de type grenat est fournie sous la forme d'un électrolyte solide inorganique de type grenat cubique, de préférence de l'oxyde de lithium-lanthane-zirconium, LLZO, dopé au niobium et/ou à l'aluminium.

8. Matériau conducteur d'ions lithium selon l'une des revendications 1 à 7, dans lequel ladite composition comprend en outre au moins un agent de raffinage, de préférence comprend au moins un oxyde d'arsenic, un oxyde d'antimoine, un oxyde de cérium, un oxyde d'étain.

9. Matériau conducteur d'ions lithium selon l'une des revendications 1 à 8, dans lequel la conductivité électronique est inférieure à 10⁻⁵ S/cm, de préférence inférieure à 10⁻⁶ S/cm à température ambiante.

10. Procédé permettant de fournir un matériau conducteur d'ions lithium, de préférence une vitrocéramique conductrice d'ions lithium selon l'une des revendications 1 à 9, comprenant les étapes consistant à
- faire fondre des matériaux précurseurs, de préférence des matériaux précurseurs de type vitrocéramique pour obtenir une masse fondue,
- homogénéiser ladite masse fondue, et
- refroidir ladite masse homogénéisée, de préférence céramiser davantage la masse refroidie, pour obtenir une masse finale sous la forme dudit matériau conducteur d'ions lithium, de préférence d'une vitrocéramique conductrice d'ions lithium selon l'une des revendications 1 à 9.

11. Procédé selon la revendication 10, dans lequel ladite masse finale est broyée pour fournir une poudre.

12. Procédé selon la revendication 11, dans lequel les particules de ladite poudre sont fournies avec une taille de particules d₅₀ = 10 micromètres ou moins, de préférence d₅₀ = 5 micromètres ou moins, de préférence d₅₀ = 2 micromètres ou moins, de préférence d₅₀ = 1 micromètre ou moins, dans lequel lesdites valeurs d₅₀ sont basées sur le poids, et dans lequel lesdites particules comprennent les parties de teneur respectives dudit matériau avec un écart de moins de 50 %, de préférence de moins de 30 %, de préférence de moins de 20 % par rapport à la teneur de chaque composant dudit matériau.

13. Procédé selon la revendication 11 ou 12, dans lequel ladite poudre est frittée avec une température de frittage inférieure à 1000 °Celsius, de préférence inférieure à 950 °Celsius.

14. Composant comprenant un matériau selon l'une des revendications 1 à 9, de préférence dans lequel ledit composant est un séparateur ou une électrode d'une batterie ou d'une membrane, de préférence dans lequel ledit matériau selon l'une des revendications 1 à 9 est co-fritté avec au moins un autre matériau pour obtenir ledit composant.

15. Batterie, de préférence batterie tout solide, comprenant un composant selon la revendication 14.
